# FASCICULE DE BREVET EUROPEEN

(11) **EP 3 597 036 B1**
(45) Date de publication et mention de la délivrance du brevet: **19.05.2021**
(21) Numéro de dépôt: 19187090.6
(22) Date de dépôt: 18.07.2019
(51) Int. Cl.: A01K 47/06

(54) **DISPOSITIF DE PROTECTION DE RUCHE, EN PARTICULIER VIS-A-VIS D'INSECTES PREDATEURS D'ABEILLES**
SCHUTZVORRICHTUNG FÜR BIENENSTOCK, INSBESONDERE VOR BIENENFRESSENDEN INSEKTEN
DEVICE FOR PROTECTING A BEEHIVE, PARTICULARLY AGAINST INSECTS THAT PREY ON BEES

(30) Priorité: 20.07.2018 FR 1856739
(43) Date de publication de la demande: 22.01.2020
(73) Titulaire: API & BEE, 47600 Nérac (FR)
(72) Inventeur: RIPET, Frédérique, 47310 Estillac (FR)
(74) Mandataire: Aquinov

(56) Documents cités:
- WO-A1-2018/079953
- FR-A1- 2 943 217
- JP-A- 2012 055 231
- KR-B1- 101 833 247
- US-A1- 2016 212 977

## Description

L'invention concerne un dispositif de protection de ruche, et la ruche associée, en vue de protéger les abeilles d'insectes volants prédateurs tels que les frelons européens (Vespa crabo) et surtout les frelons asiatiques (Vespa velutina).

Aujourd'hui, les apiculteurs sont confrontés à une destruction massive des abeilles, l'un des principaux fléaux étant le frelon asiatique qui est un redoutable tueur d'abeilles. Le frelon asiatique s'attaque à l'abeille notamment en se plaçant en vol stationnaire à l'entrée de la ruche et capture celle-ci avec ses longues pattes. Le frelon provoque un stress important aux abeilles, les attaque également sur la planche d'envol et va même jusqu'à rentrer au sein de la ruche pour piller le couvain.

On connaît de la demande de brevet FR2943217, une porte qui peut être agencée contre l'entrée de la ruche, la porte étant dotée d'orifices de passage dont les dimensions sont appropriées au passage des abeilles tout en empêchant le passage d'insectes plus gros comme les frelons. Le plateau de la ruche est conçu spécifiquement avec des glissières verticales et latérales pour y fixer la porte. Cependant, il est donc nécessaire de fabriquer de manière spécifique des plateaux de ruche aux glissières de coopération adaptées aux portes. Or, il est souhaité de trouver une solution de protection en entrée de ruches, qui soit peu onéreuse en fabrication, qui puisse s'adapter à tout type de ruche quelle que soit la nature du plateau, et que l'installation soit rapide et facile.

On connaît également des demandes de brevet WO 2018/079953 et JP2012-55231, des dispositifs sous la forme de boîtes grillagées, une boîte étant disposée plaquée contre une entrée de ruche et reposant sur le plateau de la ruche. La boîte grillagée permet de laisser passer abeilles et frelons, et une fois les frelons dans la boîte, ceux-ci sont piégés sans pouvoir ressortir. Toutefois, il est nécessaire d'avoir un plateau à l'entrée de la ruche pour supporter la boîte, ce qui n'existe pas forcément sur toutes les ruches.

L'invention a pour but de proposer une solution de protection des abeilles à l'entrée de la ruche, en fournissant un dispositif simple de fabrication et aisé à monter sur les ruches, quelle que soit la configuration de la ruche, en particulier avec ou sans plateau à l'entrée. L'invention vise aussi à concevoir une solution qui puisse une fois le dispositif fabriqué de manière simple et peu coûteuse, être aisément transportable pour être vendu ou être stocké avant la vente sans encombrement volumineux. Enfin, le dispositif doit pouvoir être rapidement installé et de manière simple.

Selon l'invention, le dispositif de protection d'entrée de ruche destiné à être fixé à une ruche, en particulier utilisé pour lutter contre les frelons, comporte au moins cinq parois dites paroi avant, paroi inférieure, paroi supérieure, et deux parois latérales, et une ouverture arrière opposée à la paroi avant, de sorte à former une boîte/une cage dont le volume intérieur est creux et qui est ouverte en face arrière (opposée à la paroi avant), au moins la paroi avant, et les parois latérales et/ou la paroi supérieure, de préférence les cinq parois, comportant une pluralité d'orifices de passage dont les dimensions sont conçues pour laisser passer les abeilles en plein vol, le dispositif étant caractérisé en qu'il est en matière plastique et se présente sous la forme d'un flan (forme plate) comprenant les parois et des zones de liaison pliables entre les parois, les zones de liaison pliables permettant de mettre le flan en forme de boîte.

Les parois sont donc en matière plastique pleine et dotées des orifices de passage.

Ainsi, le dispositif est en matière plastique et sous forme de flan en sortie de fabrication, ce qui permet une fabrication peu coûteuse et simple (moulage ou extrusion, les orifices étant soit usinés par découpe, soit issus du moulage), et procure un dispositif aisément stockable et transportable sans encombrement, et engendre une rapidité et une facilité de montage sur place par l'utilisateur, le dispositif étant simple de fixation car la matière qui est suffisamment rigide pour être résistance, est néanmoins suffisamment souple pour être mise en forme et par conséquent être fixée facilement, la matière pouvant être aisément transpercée. En outre, la matière plastique résiste aux intempéries.

Le flan présente notamment une épaisseur de l'ordre du millimètre.

La matière plastique constitutive du dispositif est notamment du polypropylène.

Selon une caractéristique, le flan comporte des formes constituant des moyens de coopération mutuelle pour assembler les parois entre elles, de préférence les moyens de coopération mutuelle étant des pattes et des encoches qui accueillent les dites pattes. L'utilisateur n'a besoin d'aucun outil pour mettre en forme et solidariser les parois.

Selon une caractéristique avantageuse, la matière plastique est translucide ou opaque. Ainsi la matière constitutive du dispositif en n'étant pas transparente, permet aux abeilles de bien discerner les parois, des orifices de passage, et facilement viser ces orifices de passage.

Le dispositif est destiné à former un sas d'entrée de ruche.

De préférence, l'une des faces du flan de matière est rugueuse tandis que l'autre face est lisse. La face rugueuse est celle en regard du volume intérieur de la boîte. Ainsi, les abeilles peuvent facilement à l'intérieur du sas, marcher/s'accrocher sur les parois.

Selon une caractéristique, les dimensions des orifices de passage sont conçues pour empêcher le franchissement en plein vol d'insectes plus gros que les abeilles ; les dimensions sont conçues pour obliger lesdits insectes à se déplacer à pattes (après s'être posés en bord des orifices) pour éventuellement s'introduire au travers desdits orifices.

L'ouverture de fond est destinée à venir en applique contre (la façade de) la ruche dans le plan contenant l'entrée de la ruche.

Ainsi, les abeilles parviennent en plein vol à passer au travers des orifices, et peuvent s'introduire par n'importe lequel des côtés du dispositif/de la boîte, tandis que les autres insectes plus gros tels que le frelon, doivent se poser en bord des orifices pour parvenir à passer. Lorsque le frelon pénètre dans le volume intérieur du dispositif qui constitue un sas, il se trouve confronté aux abeilles volant en nombre et en confinement, ce qui lui provoque un stress le poussant à ressortir.

De préférence, les orifices sont de section ovale, notamment l'ovale des orifices présentant un grand axe incliné par rapport aux bords (des parois) du dispositif. Les dimensions de la forme ovale sont inférieures à l'envergure du bourdon en plein vol.

Avantageusement, les orifices de deux parois en vis-à-vis sont décalés, ou lorsqu'ils sont en regard et qu'ils présentent une section ovale, les grands axes des ovales des deux orifices en regard sont décalés angulairement tels qu'agencés à 90°.

Selon une autre caractéristique, le dispositif comporte des moyens de fixation pour rendre solidaire ledit dispositif à une ruche, en particulier les moyens de fixation comportent au moins une surface de fixation partant respectivement du bord de la paroi supérieure et de l'ouverture arrière (de manière coplanaire à la face de l'ouverture arrière) et s'étendant vers l'extérieur perpendiculairement à ladite paroi supérieure, de préférence l'ensemble du dispositif par rapport à cette surface de fixation est apte à être plié ou à pivoter de sorte à pouvoir soulever vers le haut le dispositif lorsqu'il est en position installée sur la ruche, sans avoir à le démonter, laissant accès à l'entrée de la ruche, notamment pour enfumer la ruche. De préférence, au moins la paroi supérieure est inclinée de manière convergente depuis l'ouverture arrière jusqu'à la paroi avant et en direction de la paroi inférieure. Ainsi, le dispositif est plus facilement empilable, notamment pour son transport et son stockage (s'il a déjà été mis en forme de boîte).

La fixation du dispositif se fait en transperçant la surface de fixation via des vis ou des agrafes qui sont destinées à être introduites dans la façade de la ruche, de préférence la surface de fixation comprenant des pré-trous.

Le dispositif présente une longueur (dimension parallèle à l'entrée longitudinale de la ruche en position montée du dispositif) adaptée de façon qu'elle soit supérieure à la longueur de l'entrée de la ruche à laquelle est destiné le dispositif.

Le dispositif présente une profondeur qui est supérieure à la largeur de la planche d'envol d'une ruche sur laquelle est destinée à venir en appui la paroi inférieure du dispositif, pour faire saillie au-delà de ladite planche avec des orifices de passage accessibles pour les abeilles en position montée du dispositif. Ainsi, avec ou sans planche, le dispositif peut être fixé à la façade de la ruche sans se préoccuper de la planche qui ne sera pas non plus une gêne puisque le dispositif est conçu pour avoir une profondeur bien plus grande que tout type de planche d'envol.

Selon encore une autre caractéristique, le dispositif comporte un tablier s'étendant vers l'extérieur perpendiculairement ou sensiblement perpendiculairement à la paroi inférieure, de préférence le tablier étant disposé à proximité ou en bord de la paroi avant. Ce tablier renforce encore la protection de la ruche ; en effet, les frelons ayant un vol généralement frontal seront gênés par le tablier, tandis que les abeilles sauront contourner le tablier. Avantageusement, le dispositif comporte des volets latéraux, mobiles et/ou amovibles, qui sont aptes à être agencés dans le plan de l'ouverture arrière pour la fermer partiellement. Cela permet de s'adapter à la longueur d'ouverture de l'entrée de la ruche lorsque celle-ci est plus petite que la longueur totale de l'ouverture arrière du dispositif.

Dans un mode de réalisation préféré, les volets latéraux sont intégrés au flan en étant reliés chacun par une zone pliable en terminaison des parois latérales, tandis que la paroi inférieure du flan comprend en chacun de ses deux coins une partie réduite pleine dotée d'une ligne de pliage par rapport à la paroi inférieure et d'au moins une encoche au niveau de la ligne de pliage pour constituer un moyen de fixation d'un volet latéral respectif.

Les zones pliables sont conçues dans une matière plastique (souple) adaptée au pliage manuel.

Le dispositif peut entièrement être fabriqué par moulage.

Le dispositif peut également être fabriqué par moulage ou extrusion pour fournir un flan (forme plate), puis usiné pour réaliser la découpe des orifices de passage dans le flan, et pour plier les parois et les solidariser.

L'invention est également relative à une ruche comportant un dispositif de protection précité de l'invention.

Enfin, l'invention porte sur un procédé de mise en œuvre d'un dispositif précité de l'invention, comportant les étapes suivantes :
- pliage des parois du flan du dispositif au niveau des zones de pliage ; et
- assemblage des parois via des formes de coopération mutuelle intégrées aux parois, en particulier des pattes et des encoches, le dispositif se présentant alors en forme de boîte après assemblage (la boîte étant ouverte sur l'une de ses faces, face destinée à être appliquée contre la ruche).

Dans le mode de réalisation du flan avec volets latéraux intégrés et fixation par les parties réduites pleines et à encoches en limite de la paroi inférieure, l'utilisateur peut être amené à réaliser une étape de découpe partielle du flan (avec des ciseaux). En effet, lorsque les volets latéraux sont inutiles en raison du type de ruche auquel est destiné le dispositif, l'utilisateur pourra découper au moins les parties réduites pleines, les encoches associées étant alors inutiles puisque les volets n'ont pas à être assemblés.

L'invention porte sur un procédé d'installation et de fixation du dispositif précité contre la façade d'une ruche, incluant si le dispositif n'est pas déjà sous la forme d'une boîte, le procédé de mise en œuvre ci-dessus, caractérisé en ce que le dispositif comporte une surface de fixation en bordure de la paroi supérieure qui est fixée par agrafage ou vissage à la façade de la ruche de sorte à fixer le dispositif contre la façade de la ruche.

Avantageusement, les orifices de passage dans les parois présentent des dimensions qui sont aussi adaptés au passage d'un doigt (même avec gant) dans un orifice, facilitant la préhension du dispositif en passant les doigts dans des orifices et en maintenant d'une main le dispositif contre la façade de la ruche tandis que l'autre main est utilisée pour agrafer ou visser.

Dans la suite de la description le terme de « hauteur », les qualificatifs « supérieur », « inférieur » d'un élément du dispositif de protection sont utilisés dans le cadre d'une installation normale du dispositif, c'est-à-dire relatif à une notion verticale du dispositif installé contre la façade d'entrée d'une ruche.

La présente invention est maintenant décrite à l'aide d'exemples uniquement illustratifs et nullement limitatifs de la portée de l'invention, et à partir des illustrations jointes, dans lesquelles :
[FIG 1] La figure 1 est une vue en perspective avant et par transparence d'un dispositif de protection d'entrée de ruche prêt à être installé.
[FIG 2] La figure 2 représente une vue schématique en coupe verticale d'une ruche sur la façade de laquelle est fixé le dispositif de la figure 1.
[FIG 3] La figure 3 représente une vue de face et légèrement en perspective de l'arrière du dispositif de la figure 1.
[FIG 4] La figure 4 est une vue de côté du dispositif de la figure 1.
[FIG 5] La figure 5 est une vue en perspective arrière de la figure 1 avec les volets latéraux rabattus.
[FIG 6] La figure 6 est une vue d'un flan du dispositif de la figure 1 en sortie de fabrication, le tablier étant dans ce mode de réalisation une pièce dissociée du flan.

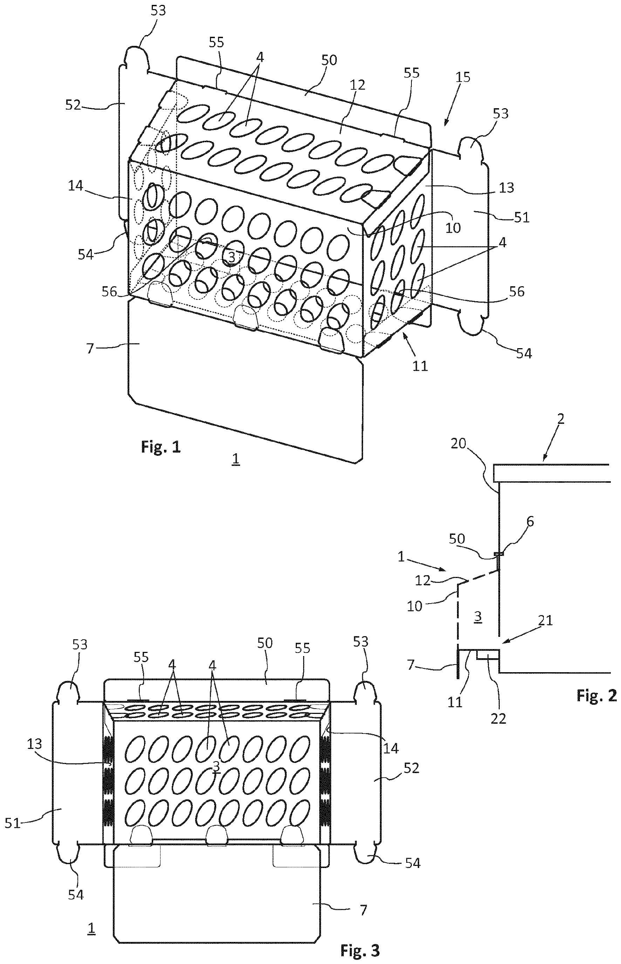

Le dispositif de protection 1 d'entrée d'une ruche de l'invention illustré sur les figures est destiné à être fixé à une ruche 2 (figure 2), plus particulièrement sur la façade de la ruche 20 comprenant l'entrée 21 de la ruche. Le dispositif a pour but de protéger l'entrée de la ruche, et donc l'intérieur de la ruche ainsi que les abeilles sortant et entrant.

Le dispositif de protection 1 se présente sous la forme d'une boîte parallélépipédique fermée qui est ajourée sur cinq de ses faces et ouverte totalement sur sa sixième face, cette dernière face état destinée à venir en applique de la façade 20 de la ruche.

Le dispositif 1 comporte cinq parois formant les cinq faces fermées, une paroi dite avant 10, une paroi inférieure 11, une paroi supérieure 12 et deux parois latérales opposées 13 et 14, et une ouverture arrière 15 à l'opposé de la paroi avant 10.

Les parois 10 à 14 délimitent un volume intérieur creux 3 constituant un sas d'entrée pour la ruche.

Chacune des parois 10 à 14 comporte des orifices de passage 4 qui sont conçus pour permettre aux abeilles de passer de l'extérieur du dispositif à l'intérieur et inversement, et cela en plein vol.

Les orifices de passage 4 sont illustrés ici avec de préférence une forme oblongue, en particulier ovale. De plus, les orifices de passage 4 qui sont illustrés dans le mode de réalisation des figures 1 à 6 présentent un grand axe incliné par rapport aux bords de la boîte/du dispositif. Toutefois, les orifices peuvent être orientés de la même manière.

Les orifices 4 présentent des dimensions permettant le passage d'au moins une abeille en vol, et empêchant le passage en plein vol d'autres insectes volants tels que des frelons, en particulier du type frelons asiatiques. Les insectes volants autres que les abeilles sont obligés de se poser à l'entrée des orifices de passage 4 pour s'introduire dans le volume intérieur 3. A titre d'exemple, la section des orifices 4 est ovale en présentant un grand axe de l'ordre de 45 mm et un petit axe de l'ordre de 25 mm.

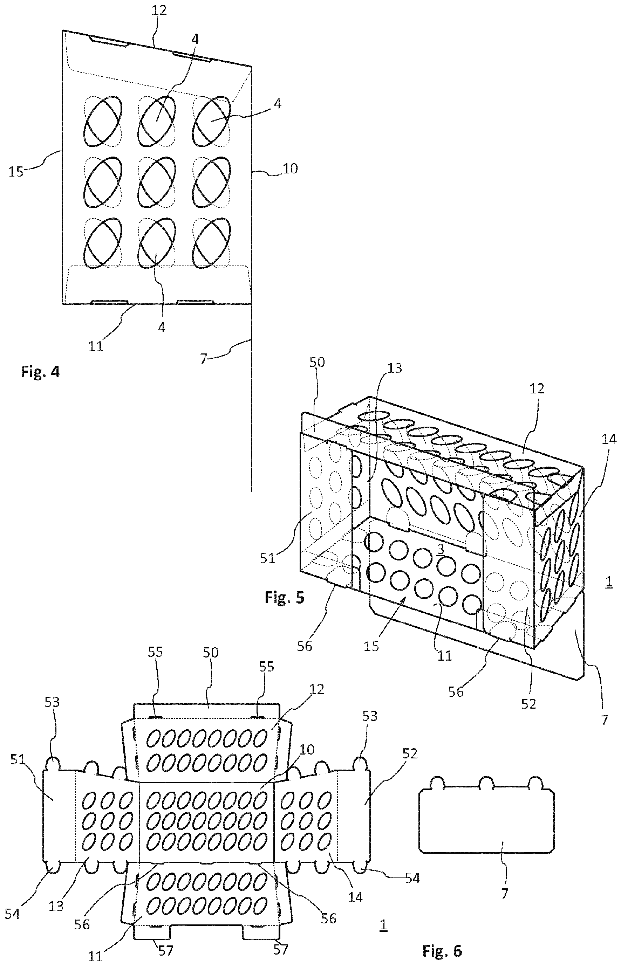

Dans l'exemple illustré et plus particulièrement visible en figure 4, les orifices de passage 4 d'au moins deux parois en vis-à-vis (traits pleins et pointillés) ne sont pas selon leur section strictement en regard, les grands axes de deux orifices ovales en vis-à-vis sont décalés angulairement, par exemple agencés à 90°.

Le dispositif 1 comporte en outre des moyens de fixation tels qu'au moins une surface de fixation pour solidariser ledit dispositif à la façade 20 de la ruche.

A titre d'exemple, le dispositif comporte en tant que surface de fixation 50, une aile pliée vers l'extérieur à partir du bord de l'ouverture 15 et perpendiculaire à la paroi supérieure 12, ainsi que coplanaire au plan de l'ouverture arrière. La surface de fixation est mise en applique contre la façade 20 de la ruche et fixée par exemple par des vis 6 (figure 2).

La ligne de liaison de la paroi supérieure 12 à l'aile 50 est avantageusement pliable (souple) pour permettre à l'apiculteur de pivoter le dispositif vers le haut, le soulevant, et avoir ainsi accès à l'entrée de la ruche pour l'enfumer par exemple.

La paroi inférieure 11 du dispositif est mise en appui sur la planche d'envol 22 (figure 2). Avantageusement, le dispositif de protection 1 comporte en outre un tablier 7 plein qui s'étend en partie inférieure du dispositif et de manière frontale, de préférence de manière coplanaire ou sensiblement coplanaire à la paroi avant 10.

Les dimensions du dispositif seront adaptées en fonction des dimensions de la ruche et l'ouverture de la ruche. A titre d'exemple nullement limitatif, le volume intérieur 3 présente une hauteur de l'ordre de 200 mm, une longueur (parallèlement à la longueur de l'ouverture de la ruche) de l'ordre de 350 mm et une profondeur (direction perpendiculaire à la façade de la ruche) de l'ordre de 150 mm. Le tablier 7 possède une hauteur de l'ordre de 160 mm. Selon une caractéristique avantageuse, le dispositif de protection 1 comporte en outre deux volets 51 et 52 rabattables ou fixés de manière amovible, qui sont agencés vers l'intérieur du dispositif et coplanaires avec le plan de l'ouverture arrière 15, en étant solidaires du bord des deux parois latérales respectives 13 et 14. En position rabattue comme visible sur la figure 5, les volets permettent de diminuer la longueur de l'ouverture 15 de façon à correspondre à une entrée de ruche plus petite, généralement pour les ruches dites ruchettes. Pour le maintien en position rabattue des volets 51 et 52, à titre d'exemple, chacun des volets comportent des pattes opposées 53 et 54 en partie inférieure et supérieure qui s'engagent dans des encoches appropriées 55 et 56 agencées respectivement en bord des parois inférieure 11 et supérieure 12. Les encoches supérieures 55 sont ménagées grâce à la présence de la surface de fixation 50. Les encoches inférieures 56 sont ménagées en bord de la paroi inférieure 11 et à proximité des coins, grâce à la présence de parties réduites pleines 57 (figure 6).

Le dispositif de protection 1 est de préférence en matière plastique, par exemple en polypropylène, et se présente sous la forme d'un flan (forme plate), tel qu'illustré sur la figure 6, avec des zones de liaison pliables pour la mettre en forme de boîte. La solidarisation des parois, du tablier si celui-ci n'est pas solidaire du flan en sortie de fabrication, peut se faire de différentes manières; ici à titre d'exemple nullement limitatif, l'assemblage se fait par des moyens de coopération mutuelle du types pattes à introduire dans des encoches.

De préférence, pour simplifier la fabrication, le flan intègre les volets latéraux 51 et 52, même si ceux-ci sont parfois inutiles pour certains types de ruche. Dans ce cas de figure, l'utilisateur pourra découper avec des ciseaux les parties 57 inutiles ; il laissera de préférence les volets 51 et 52 en les rabattant vers l'extérieur comme illustré sur la figure 1, qui seront plaqués contre la façade de la ruche après fixation du dispositif.

## Revendications

1. Dispositif (1) de protection d'entrée de ruche, en particulier utilisé pour lutter contre les frelons, comportant au moins cinq parois dites paroi avant (10), paroi inférieure (11), paroi supérieure (12), et deux parois latérales (13, 14), et une ouverture arrière (15) opposée à la paroi avant, de sorte à former une boîte dont le volume intérieur (3) est creux et qui est ouverte en face arrière, au moins la paroi avant, et les parois latérales et/ou la paroi supérieure, comportant une pluralité d'orifices de passage (4), caractérisé en qu'il est en matière plastique et se présente sous la forme d'un flan comprenant les parois et des zones de liaison pliables entre les parois, les zones de liaison pliables permettant de mettre le flan en forme de boîte.

2. Dispositif selon la revendication 1, **caractérisé en ce que** le flan comporte des formes constituant des moyens de coopération mutuelle pour assembler les parois entre elles, de préférence les moyens de coopération mutuelle étant des pattes (53, 54) et des encoches (55, 56) qui accueillent les dites pattes.

3. Dispositif selon la revendication 1 ou 2, **caractérisé en ce qu'**il est destiné à former un sas d'entrée de ruche.

4. Dispositif selon l'une quelconque des revendications précédentes, **caractérisé en ce que** les orifices de passage (4) sont de section ovale, notamment l'ovale des orifices présentant un grand axe incliné par rapport aux bords du dispositif.

5. Dispositif selon l'une quelconque des revendications précédentes, **caractérisé en ce que** les orifices de passage (4) de deux parois en vis-à-vis sont décalés, ou lorsqu'ils sont en regard et qu'ils présentent une section ovale, les grands axes des ovales de deux orifices en regard sont décalés angulairement tels qu'agencés à 90°.

6. Dispositif selon l'une quelconque des revendications précédentes, **caractérisé en ce que** la matière plastique constitutive du dispositif est en polypropylène.

7. Dispositif selon l'une quelconque des revendications précédentes, **caractérisé en ce que** la matière plastique est translucide ou opaque.

8. Dispositif selon l'une quelconque des revendications précédentes, **caractérisé en ce que** l'une des faces du flan de matière est rugueuse tandis que l'autre face est lisse, la face rugueuse étant celle en regard du volume intérieur de la boîte.

9. Dispositif selon l'une quelconque des revendications précédentes, **caractérisé en ce qu'**il comporte des moyens de fixation (50), en particulier les moyens de fixation comportent au moins une surface de fixation partant respectivement du bord de la paroi supérieure et de l'ouverture arrière et s'étendant vers l'extérieur perpendiculairement à ladite paroi supérieure, de préférence l'ensemble du dispositif par rapport à cette surface de fixation est apte à être plié ou à pivoter.

10. Dispositif selon l'une quelconque des revendications précédentes, **caractérisé en ce qu'**au moins la paroi supérieure (12) est inclinée de manière convergente depuis l'ouverture arrière (15) jusqu'à la paroi avant (10) et en direction de la paroi inférieure.

11. Dispositif selon l'une quelconque des revendications précédentes, **caractérisé en ce qu'**il comporte un tablier (7) s'étendant vers l'extérieur perpendiculairement ou sensiblement perpendiculairement à la paroi inférieure (11), de préférence le tablier étant disposé à proximité ou en bord de la paroi avant (10).

12. Dispositif selon l'une quelconque des revendications précédentes, **caractérisé en ce qu'**il comporte des volets latéraux (51, 52), mobiles et/ou amovibles, qui sont aptes à être agencés dans le plan de l'ouverture arrière (15) pour la fermer partiellement.

13. Ruche comportant un dispositif de protection selon l'une quelconque des revendications précédentes.

14. Procédé de mise en œuvre d'un dispositif selon l'une quelconque des revendications 1 à 12, comportant les étapes suivantes : pliage des parois (10, 11, 12, 13, 14) du flan du dispositif au niveau des zones de pliage ; et assemblage des parois via des formes de coopération mutuelle intégrées aux parois, en particulier des pattes (53, 54) et des encoches (55, 56), le dispositif se présentant alors en forme de boîte après assemblage.

15. Procédé d'installation et de fixation contre la façade (20) d'une ruche, du dispositif selon l'une quelconque des revendications 1 à 12, incluant si le dispositif n'est pas déjà sous la forme d'une boîte, le procédé de mise en œuvre selon la revendication précédente, **caractérisé en ce que** le dispositif comporte une surface de fixation (50) en bordure de la paroi supérieure (12) qui est fixée par agrafage ou vissage à la façade de la ruche de sorte à fixer le dispositif contre la façade de la ruche.

## Patentansprüche

1. Vorrichtung (1) zum Schutz des Eingangs eines Bienenstocks, insbesondere zur Bekämpfung von Hornissen, mit mindestens fünf Wänden, die als Vorderwand (10), Bodenwand (11), Deckwand (12) und zwei Seitenwände (13, 14) bezeichnet werden, und einer hinteren Öffnung (15), die der Vorderwand gegenüberliegt, um einen Kasten zu bilden, dessen Innenvolumen (3) hohl ist und der auf der Rückseite offen ist, wobei mindestens die Vorderwand und die Seitenwände und/oder die Deckwand mehrere Durchgangsöffnungen (4) aufweisen, **dadurch gekennzeichnet, dass** sie aus Kunststoff hergestellt ist und in Form eines Zuschnitts vorliegt, der die Wände und faltbare Verbindungsbereiche zwischen den Wänden aufweist, wobei es die faltbaren Verbindungsbereiche ermöglichen, den Zuschnitt in eine Kastenform zu bringen.

2. Vorrichtung nach Anspruch 1, **dadurch gekennzeichnet, dass** der Zuschnitt Formen umfasst, die Mittel zum gegenseitigen Zusammenwirken bilden, um die Wände miteinander zu verbinden, wobei die Mittel zum gegenseitigen Zusammenwirken vorzugsweise Laschen (53, 54) und Kerben (55, 56) sind, die die Laschen aufnehmen.

3. Vorrichtung nach Anspruch 1 oder 2, **dadurch gekennzeichnet, dass** sie dazu bestimmt ist, eine Eingangsschleuse zu einem Bienenstock zu bilden.

4. Vorrichtung nach einem der vorhergehenden Ansprüche, **dadurch gekennzeichnet, dass** die Durchgangsöffnungen (4) einen ovalen Querschnitt haben, wobei insbesondere das Oval der Öffnungen eine zu den Kanten der Vorrichtung geneigte Hauptachse aufweist.

5. Vorrichtung nach einem der vorhergehenden Ansprüche, **dadurch gekennzeichnet, dass** die Durchgangsöffnungen (4) zweier gegenüberliegender Wände versetzt sind oder, wenn sie gegenüberliegen und einen ovalen Querschnitt aufweisen, die Hauptachsen der Ovale zweier gegenüberliegender Öffnungen derart winkelversetzt sind, dass sie bei 90° angeordnet sind.

6. Vorrichtung nach einem der vorhergehenden Ansprüche, **dadurch gekennzeichnet, dass** das Kunststoffmaterial, aus dem die Vorrichtung besteht, Polypropylen ist.

7. Vorrichtung nach einem der vorhergehenden Ansprüche, **dadurch gekennzeichnet, dass** das Kunststoffmaterial durchsichtig oder lichtundurchlässig ist.

8. Vorrichtung nach einem der vorhergehenden Ansprüche, **dadurch gekennzeichnet, dass** eine der Seiten des Materialzuschnitts aufgeraut ist, während die andere Seite glatt ist, wobei die aufgeraute Seite diejenige ist, die dem Innenvolumen des Kastens zugewandt ist.

9. Vorrichtung nach einem der vorhergehenden Ansprüche, **dadurch gekennzeichnet, dass** sie Befestigungsmittel (50) umfasst, insbesondere umfassen die Befestigungsmittel mindestens eine Befestigungsoberfläche, die jeweils vom Rand der Deckwand und der hinteren Öffnung ausgeht und sich senkrecht zu dieser Deckwand nach außen erstreckt, wobei die gesamte Vorrichtung in Bezug auf diese Befestigungsfläche vorzugsweise klapp- oder schwenkbar ist.

10. Vorrichtung nach einem der vorhergehenden Ansprüche, **dadurch gekennzeichnet, dass** mindestens die Deckwand (12) von der hinteren Öffnung (15) zur Vorderwand (10) und zur Bodenwand hin konvergent geneigt ist.

11. Vorrichtung nach einem der vorhergehenden Ansprüche, **dadurch gekennzeichnet, dass** sie eine Schürze (7) umfasst, die sich senkrecht oder im Wesentlichen senkrecht zur Bodenwand (11) nach außen erstreckt, wobei die Schürze vorzugsweise nahe oder am Rand der Vorderwand (10) angeordnet ist.

12. Vorrichtung nach einem der vorhergehenden Ansprüche, **dadurch gekennzeichnet, dass** sie bewegliche und/oder abnehmbare seitliche Klappen (51, 52) umfasst, die in der Ebene der hinteren Öffnung (15) angeordnet werden können, um diese teilweise zu schließen.

13. Bienenstock mit einer Schutzvorrichtung nach einem der vorhergehenden Ansprüche.

14. Verfahren zum Umsetzen einer Vorrichtung nach einem der Ansprüche 1 bis 12, umfassend die folgenden Schritte:
Biegen der Wände (10, 11, 12, 13, 14) des Vorrichtungszuschnitts an den Biegebereichen; und
Verbinden der Wände über in den Wänden integrierte Formen des Zusammenwirkens, insbesondere Laschen (53, 54) und Kerben (55, 56), wobei die Vorrichtung nach dem Verbinden kastenförmig ist.

15. Verfahren zur Installation und Befestigung der Vorrichtung nach einem der Ansprüche 1 bis 12 an der Vorderseite (20) eines Bienenstocks, einschließlich, wenn die Vorrichtung nicht bereits in Form eines Kastens vorliegt, des Umsetzungsverfahrens nach dem vorhergehenden Anspruch, **dadurch gekennzeichnet, dass** die Vorrichtung eine Befestigungsfläche (50) am Rand der Deckwand (12) umfasst, die durch Klammern oder Schrauben an der Vorderseite des Bienenstocks so befestigt wird, dass die Vorrichtung an der Vorderseite des Bienenstocks befestigt wird.

## Claims

1. Device (1) for protecting the entrance to a beehive, in particular used to protect against hornets, comprising at least five walls referred to as a front wall (10), bottom wall (11), top wall (12) and two side walls (13, 14), and a rear opening (15) opposite the front wall, so as to form a box of which the interior volume (3) is hollow and which is open at the rear face, at least the front wall, and the side walls and/or the top wall, comprising a plurality of passage openings (4), **characterized in that** the device is made of plastics material and is in the form of a blank comprising the walls and foldable connection regions between the walls, the foldable connection regions allowing the blank to be put into a box shape.

2. Device according to claim 1, **characterized in that** the blank comprises shapes constituting mutual engagement means for joining the walls together, the mutual engagement means preferably being tabs (53, 54) and notches (55, 56) which accommodate said tabs.

3. Device according to either claim 1 or claim 2, **characterized in that** it is intended to form a beehive entrance lock.

4. Device according to any of the preceding claims, **characterized in that** the passage openings (4) have an oval cross section, in particular the oval of the openings having a major axis that is inclined relative to the edges of the device.

5. Device according to any of the preceding claims, **characterized in that** the passage openings (4) of two mutually facing walls are offset, or when they are opposite and have an oval cross section, the major axes of the ovals of two opposite openings are angularly offset such that they are arranged at 90°.

6. Device according to any of the preceding claims, **characterized in that** the plastics material constituting the device is polypropylene.

7. Device according to any of the preceding claims, **characterized in that** the plastics material is translucent or opaque.

8. Device according to any of the preceding claims, **characterized in that** one of the faces of the material blank is rough while the other face is smooth, the rough face being the one that faces the interior volume of the box.

9. Device according to any of the preceding claims, **characterized in that** it comprises fastening means (50), and in particular the fastening means comprise at least one fastening surface starting, respectively, from the edge of the top wall and from the rear opening and extending outward perpendicularly to said top wall, and preferably the whole device is capable of being folded or pivoted in relation to this fastening surface.

10. Device according to any of the preceding claims, **characterized in that** at least the top wall (12) is inclined convergently from the rear opening (15) to the front wall (10) and in the direction of the bottom wall.

11. Device according to any of the preceding claims, **characterized in that** it comprises an apron (7) extending outward perpendicularly or substantially perpendicularly to the bottom wall (11), the apron preferably being arranged close to or at the edge of the front wall (10).

12. Device according to any of the preceding claims, **characterized in that** it comprises movable and/or removable lateral flaps (51, 52) which are capable of being arranged in the plane of the rear opening (15) in order to partially close it.

13. Beehive comprising a protection device according to any of the preceding claims.

14. Method for implementing a device according to any of claims 1 to 12, comprising the following steps: folding the walls (10, 11, 12, 13, 14) of the blank of the device in the folding regions; and joining the walls via mutual engagement shapes which are integrated into the walls, in particular tabs (53, 54) and notches (55, 56), the device then being in the shape of a box after joining.

15. Method for installing and fastening the device according to any of claims 1 to 12 against the front (20) of a beehive, including, if the device is not already in the shape of a box, the implementation method according to the preceding claim, **characterized in that** the device comprises a fastening surface (50) at the edge of the top wall (12), which surface is fastened by stapling or screwing to the front of the beehive so as to fasten the device against the front of the beehive.
